# EUROPÄISCHE PATENTSCHRIFT

(11) **EP 1 887 267 B1**
(45) Veröffentlichungstag und Bekanntmachung des Hinweises auf die Patenterteilung: **14.07.2010**
(21) Anmeldenummer: 07013944.9
(22) Anmeldetag: 17.07.2007
(51) Int. Cl.: F16K 27/04, E03C 1/04

(54) **Mischerkartusche**
Mixer cartridge
Cartouche de mélangeur

(30) Priorität: 31.07.2006 DE 102006036148
(43) Veröffentlichungstag der Anmeldung: 13.02.2008
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- EP-A1- 0 359 999
- EP-A1- 0 382 041
- EP-A2- 0 942 211
- DE-T1- 3 890 735
- US-A- 4 733 694

## Beschreibung

Die Erfindung betrifft eine Mischerkartusche zum Einsetzen in eine Sanitärarmatur, wie beispielsweise aus EP-A-382 041 bekannt.

Es ist bekannt, die eigentliche Sanitärarmatur, die ein bestimmtes Aussehen aufweisen soll, von der Funktion des Mischsystems dadurch zu trennen, dass man in den Sanitärarmaturen Aufnahmen ausbildet, in die die Mischerkartuschen eingesetzt werden können. Diese Mischerkartuschen enthalten in sich abgeschlossen ein Mischersystem. Die Verbindung mit den Wasserführungen, die in der Aufnahme des Armaturengehäuses münden, geschieht mithilfe eines Bodens, der die Mischerkartusche in Richtung auf das Armaturengehäuse abschließt.

Zwischen dem Boden und dem im Inneren der Kartusche angeordneten Mischsystem sind Dichtungen vorhanden, ebenso zwischen dem Boden und dem Armaturengehäuse. Da der Boden aber ein Teil des Kartuschengehäuses ist, ist er üblicherweise an einer bestimmten Stelle des Kartuschengehäuses in einer festen Position festgelegt. Die Dichtungen besitzen dabei eine gewisse Vorspannung beziehungsweise einen bestimmten Grad an Komprimierung, der so abgestimmt ist, dass bei den auftretenden Wasserdrücken eine korrekte Abdichtung erfolgt.

Wenn man die Vorspannung zu groß macht, sind die Mischsysteme schwergängig. Macht man die Vorspannung zu gering, ist nicht unter allen möglicherweise auftretenden Drücken eine vollständige Abdichtung gegeben.

Bei einer bekannten Mischerkartusche dieser Art (US 6,454,175) ist der Boden am Ende des Kartuschengehäuses mithilfe von Rastvorsprüngen festgelegt. Er enthält in seiner Oberseite und seiner Unterseite Nuten zur Aufnahme einer Formdichtung.

Bei einer weiteren Sanitärarmatur (US 4733694) wird der bewegliche Kartuschenboden von einer zusätzlichen Feder gegen einen Teil des Kartuschengehäuses angedrückt.

Bei dem aus EP-A-382041 bekannten Mischventil für Sanitärarmaturen ist ein Bodenteil in einer Mantelhülse zum Ausgleich von Fertigungstoleranzen axial begrenzt verschiebbar fixiert.

Der Erfindung liegt die Aufgabe zu Grunde, eine Mischerkartusche zu schaffen, die einerseits leichtgängig ist und andererseits auch bei sehr hohen Wasserdrücken immer eine vollständige Abdichtung ermöglicht.

Zur Lösung dieser Aufgabe schlägt die Erfindung eine Mischerkartusche mit den im Anspruch 1 genannten Merkmalen vor. Weiterbildungen der Erfindung sind Gegenstand von Unteransprüchen.

Die begrenzte Beweglichkeit des Kartuschenbodens gegenüber dem Kartuschengehäuse macht es möglich, dass einerseits bei der Definition der Begrenzung der Beweglichkeit die unterschiedlichen Arten von Drücken berücksichtigt werden können. Mit steigendem Wasserdruck kann andererseits eine verstärkte Komprimierung der Dichtungen dadurch erfolgen, dass der Kartuschenboden insgesamt druckbeaufschlagt ist und sich dem Kartuschengehäuse annähert. Der zunehmende Wasserdruck wirkt also nicht nur auf die Dichtungen im Sinne des Umgehens der Dichtungen, sondern auf den Kartuschenboden, der die Dichtungen stärker komprimiert.

Insbesondere kann in Weiterbildung vorgesehen sein, dass der maximal mögliche Abstand zwischen dem Mischersystem und dem Boden, der durch die begrenzte Bewegung ermöglicht wird, einer für einen geringen Wasserdruck ausreichenden Beaufschlagung der Dichtungen entspricht. Es wird also eine Beaufschlagung beziehungsweise Komprimierung der Dichtungen eingestellt, die für geringe Wasserdrücke ausreichend ist. Dadurch bleibt das Mischsystem leichtgängig.

Erfindungsgemäß ist der Boden der Mischerkartusche an einem Bodenbauteil ausgebildet ist, das einen das Kartuschengehäuse umgreifenden Hülsenabschnitt aufweist. Kartuschengehäuse sind üblicherweise zumindest angenähert zylindrisch, und zwar üblicherweise kreiszylindrisch. Der das Kartuschengehäuse abschließende Boden ist dabei an einer Stirnseite angeordnet. Um die Beweglichkeit zwischen Boden und Kartuschengehäuse besser kontrollieren zu können, ist der Hülsenabschnitt vorgesehen, der an der Mantelfläche des Kartuschengehäuses direkt oder indirekt anliegen kann.

Erfindungsgemäß ist auch vorgesehen, dass zwischen der Mantelfläche des Kartuschengehäuses und dem Hülsenabschnitt des Bodenbauteils eine Gleithülse angeordnet ist, der gegenüber das Bodenbauteil verschiebbar ist. Diese Gleithülse kann in der Materialauswahl auf das Material des Bodenbauteils abgestimmt werden, so dass hier eine nur geringe Reibung auftritt, während das Material des Kartuschengehäuses hierauf keine Rücksicht zu nehmen braucht.

Es kann vorgesehen sein, dass die Gleithülse mindestens in Abzugsrichtung des Bodens fest mit dem Kartuschengehäuse verbunden ist.

Erfindungsgemäß kann in Weiterbildung zwischen der Gleithülse und dem Bodenbauteil ein Rastmittel angeordnet werden, das dazu dient, den Hülsenabschnitt des Bodenbauteils beim Zusammensetzen einrasten zu lassen, andererseits ein Abziehen aber verhindert.

Hierzu kann an der Gleithülse mindestens ein Rastvorsprung angeordnet sein, der in eine Öffnung des Hülsenabschnitts eingreift.

Die Mischerkartusche nach der Erfindung sieht beispielsweise so aus, dass an der Außenseite des Kartuschengehäuses die Gleithülse angeordnet ist, und zwar dicht an dem Kartuschengehäuse anliegend. An der Außenseite der Gleithülse liegt dann der Hülsenabschnitt des Bodenbauteils an. Die begrenzte Bewegung ist zwischen der Gleithülse und dem Bodenbauteil gegeben.

In nochmaliger Weiterbildung der Erfindung kann vorgesehen sein, dass die Gleithülse einen nach außen gerichteten vorspringenden Flansch aufweist, der eine Anlagefläche für eine Stirnkante des Hülsenabschnitts des Bodenbauteils bildet. Auf diese Weise wird die begrenzte Bewegung bewirkt oder anders ausgedrückt, die Bewegung des Bodens in Richtung auf das Kartuschengehäuse begrenzt. Es kann auf diese Weise darauf geachtet werden, dass keine zu starke Komprimierung von Dichtungen auftritt.

Um dafür zu sorgen, dass die Gleithülse in Abzugsrichtung des Bodens fest mit dem Kartuschengehäuse verbunden ist, kann das Kartuschengehäuse eine Schulter aufweisen, an die sich eine Stirnkante der Gleithülse abstützt.

Erfindungsgemäß kann in Weiterbildung vorgesehen sein, dass die Kartusche in der Aufnahme der Sanitärarmatur in einer festen axialer Position festlegbar ist.

Diese axiale Position kann beispielsweise dadurch erreicht werden, dass eine Überwurfmutter verwendet wird. Diese Überwurfmutter greift mit ihrer Überwurfangriffsfläche an der Gleithülse an, vorzugsweise an deren nach außen vorspringenden Flansch. Die Gleithülse weist an der Unterseite des Flanschs über den Umfang verteilte Rippen auf. Diese Rippen können dann auf der Außenseite des Armaturengehäuses aufliegen, und in dieser Position wird die Gleithülse von der Überwurfmutter festgehalten.

In nochmaliger Weiterbildung der Erfindung kann vorgesehen sein, dass der Boden mit je einem Stutzen in die Öffnungen der Aufnahmen der Sanitärarmatur eingreift. Die freie Stirnkante dieses Stutzens bildet dabei eine Kolbenfläche, die bei zunehmendem Wasserdruck den Boden verschiebt.

Weitere Merkmale, Einzelheiten und Vorzüge der Erfindung ergeben sich aus den Ansprüchen , deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Axialschnitt durch eine Sanitärarmatur mit eingesetzter nur teilweise dargestellter Mischerkartusche;
- Figur 2: eine Teildarstellung der Figur 1 bei erhöhtem Wasserdruck;
- Figur 3: einen vergrößerten Teilschnitt durch die Darstellung der Figur 2;
- Figur 4: eine teilweise Seitenansicht der Rasteinrichtung in verschobenen Zustand;
- Figur 5: eine teilweise Seitenansicht der Rasteinrichtung im Ausgangszustand;
- Figur 6: eine der Figur 5 entsprechende Darstellung aus einer anderen Richtung und
- Figur 7: einen Teilschnitt ähnlich wie Figur 3.

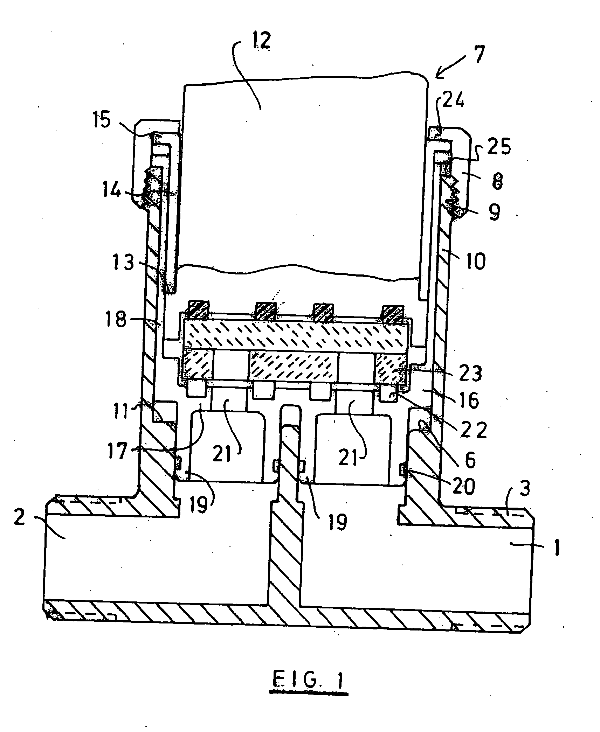

Figur 1 zeigt einen Schnitt durch eine Sanitärarmatur mit zwei Wassereinlässen 1 und 2, die als Stutzen mit einem Außengewinde 3 ausgebildet sind. Der Armaturengrundkörper weist auch noch einen dritten Anschluss auf, bei dem es sich um einen Abgang handelt und der in dem Schnitt der Figur nicht zu sehen ist.

Die beiden Einlässe 1, 2 führen in zylindrische Öffnungen 4 und 5, die senkrecht zu der Ebene der Einlässe 1, 2 verlaufen. Sie münden in einem Aufnahmeraum 6 für eine Mischerkartusche 7, die in diesem Aufnahmeraum 6 eingesetzt ist. Die Öffnungen 4 und 5 münden in einer Stirnfläche 11 des Aufnahmeraums 6, die am Rande des Aufnahmeraums 6 eine Schulter bildet. Die Mischerkartusche 7 ist mithilfe einer Überwurfmutter 8 in dem Aufnahmeraum 6 festgelegt. In der Mischerkartusche 7 sind alle Funktionsteile für die Mischung, das Absperren und gegebenenfalls das Verteilen des Mischwassers untergebracht.

Die Überwurfmutter 8 greift in ein Außengewinde 9 ein, das am Ende des den Aufnahmeraum 6 enthaltenden Bauteils 10 ausgebildet ist.

Die Mischerkartusche 7 ist in der Figur 1 teilweise geschnitten dargestellt. Sie weist ein Kartuschengehäuse 12 auf, das im wesentlichen einen kreiszylindrischen Querschnitt aufweist, der sich im Endbereich zur Bildung einer Schulter 13 erweitert. Auf dieser Schulter 13 stützt sich eine Gleithülse 14 ab, die im Bereich ihres der Schulter 13 abgewandten Endes einen nach außen gerichteten Flansch 15 enthält. Die Gleithülse 14 ist durch die Schulter 13 in Richtung in Figur 1 nach unten, also in Richtung auf die Stirnfläche 11 des Aufnahmeraums 6, gegen Abziehen gesichert. Die Mischerkartusche weist in ihrem dem Armaturengrundkörper zugewandten Endbereich ein Bodenbauteil 16 auf, das den eigentlichen Boden 17 und einen Hülsenabschnitt 18 enthält. Der Hülsenabschnitt 18 liegt an der Außenseite der Gleithülse 15 an und ist dieser gegenüber in gewissem Ausmaß verschiebbar. Der Boden 17 enthält für jede Öffnung 4, 5 einen Stutzen 19, der in die Öffnung 4 beziehungsweise 5 eingreift und in seiner Mantelfläche eine Nut 20 für eine Dichtung enthält. Das Innere jedes Stutzens 19 weist eine Durchgangsöffnung 21 auf, die in das Innere des Kartuschengehäuses 7 führt. In der Darstellung der Figur 1 ist die Mischerkartusche 7 im geschlossenen Zustand dargestellt. Auf der dem Mischersystem in dem Kartuschengehäuse 12 zugewandten Seite des Bodens 17 ist jede Durchgangsöffnung 21 von einer Nut 22 zum Einsetzen einer Dichtung umgeben. Auf diese Weise erfolgt eine Abdichtung der Öffnungen 21 gegeneinander, so dass das Wasser durch die Öffnungen 21 in die Verteilerscheibe des Mischersystems gelangen kann.

Die Position der Mischerkartusche 7 in dem Aufnahmeraum 6 wird dadurch bestimmt, dass die Überwurfmutter 8 auf das Außengewinde 9 auf Block aufgeschraubt ist. Die Überwurfmutter 8 greift mit ihrem nach innen gerichteten Flansch 24 an dem Flansch 15 der Gleithülse 14 an, der seinerseits auf der Schulter 13 des Kartuschengehäuses 12 aufliegt. An der Unterseite des Flanschs 15 sind über den Umfang verteilt axiale Rippen ausgebildet, die durch Schlitze des Bodenbauteils 18 hindurch greifen und auf der Stirnkante des den Aufnahmeraum 6 enthaltenden Bauteils 10 des Armaturengehäuses aufliegen. Diese Rippen werden später noch dargestellt. In dieser Position ist die axiale Position des Bodenbauteils 16 durch das Anliegen eines äußeren Flanschs 25 des Hülsenabschnitts 18 auf dem Außenende des den Aufnahmeraum 6 enthaltenden Bauteils 10 definiert.

Die Position ist so gewählt, dass die Dichtungen zwischen dem Boden 17 und dem Mischersystem etwas komprimiert sind, um eine bei niedrigen Wasserdrücken ausreichende Abdichtung zu gewährleisten.

Das Bodenbauteil 16 ist gegenüber der Gleithülse 15 in gewissem Ausmaß verschiebbar. Zwischen der Oberseite des Flanschs 25 des Hülsenabschnitts 18 des Bodenbauteils 16 und der Unterseite des Flanschs 15 der Gleithülse 14 ist ein gewisser Abstand vorhanden, der in Figur 1 dargestellt ist. Um diesen Betrag kann das Bodenbauteil 16 und damit der Boden 17 in Richtung auf die Mischerkartusche verschoben werden. Diese Verschiebung ist gleichzeitig die Richtung, in der eine zunehmende Komprimierung der verschiedenen Dichtungen bewirkt wird.

Wenn der Wasserdruck in den Einlässen 1, 2 zunimmt, so wird das Bodenbauteil in Richtung auf die axial festgelegte Mischerkartusche 7 verschoben. Dies ergibt sich aus den Kolbenflächen, die an den Stirnseiten der Stutzen 19 vorhanden sind. Diese Verschiebung führt zu einer stärkeren Komprimierung und damit Vorspannung der verschiedenen Dichtungen, so dass jetzt für den höheren Wasserdruck auch eine ausreichende Abdichtung gegeben ist.

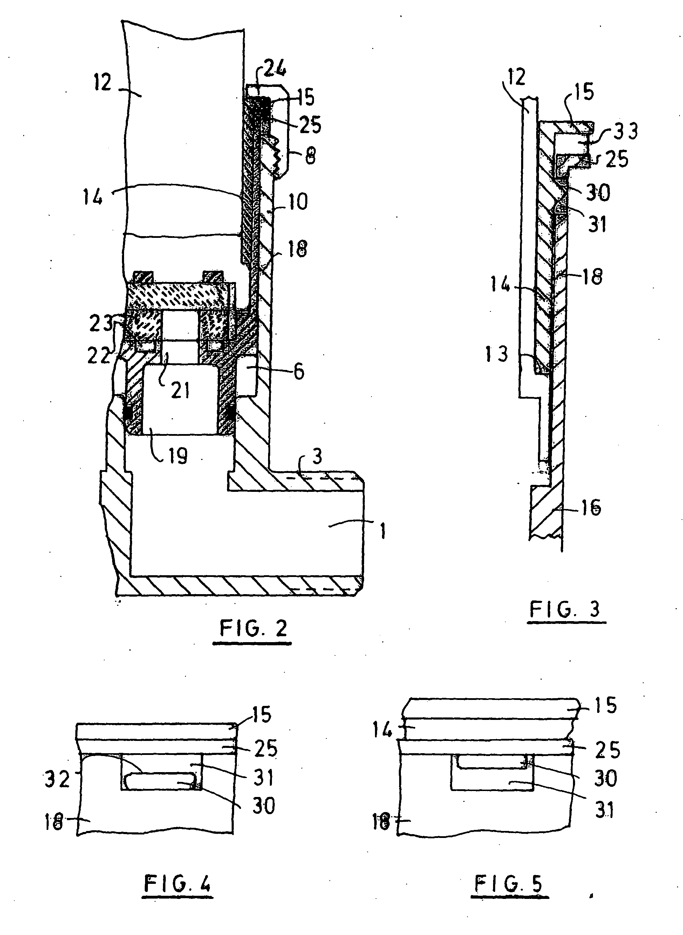

Diese Situation ist in Figur 2 dargestellt, die einen Teilschnitt ähnlich wie Figur 1 zeigt, aber bei erhöhtem Wasserdruck. Das Bodenbauteil 16 ist so weit verschoben, bis der Flansch 25 des Hülsenabschnitts 18 an der Unterseite des Flanschs 15 der Gleithülse 14 zur Anlage kommt, siehe rechts oben in Figur 2. die Gleithülse 14 und das Bodenbauteil 16 sind aus Materialien hergestellt, die ein leichtes Verschieben ermöglichen, damit diese gerade beschriebene Verschiebung nicht gehindert wird.

Die Festlegung des Bodenbauteils 16 an dem Kartuschengehäuse 12 wird jetzt unter Bezugnahme auf Figur 3 beschrieben. Die Gleithülse 14 weist im Bereich ihres Flanschendes mit Abstand von dem Flansch 15 einen nach außen gerichteten Vorsprung 30 auf. Der Hülsenabschnitt 18 des Bodenbauteils 16 weist unmittelbar unterhalb seines am Ende angeordneten Flanschs 25 eine Durchbrechung 31 auf, die sich über einen Teil des Umfangs erstreckt. Der Vorsprung 30 der Gleithülse 14 ist ein seiner dem Flansch 15 abgewandten Seite schräg ausgebildet. Beim Zusammensetzen kann das Bodenbauteil 16 auf die Gleithülse 14 aufgeschoben werden, wobei dann ihr äußeres Ende an dem schräg verlaufenden Teil des Vorsprungs 30 abgleitet, bis der Vorsprung 30 in die Durchbrechung 31 einschnappen kann. In der in Figur 3 dargestellten Position liegt die Oberseite 32 des Vorsprungs 30 an der Oberkante der Durchbrechung 31 an. Dies ist die Position des maximalen Abstands des Bodens 17 der Mischerkartusche 7 von dem Kartuschengehäuse 12. Aus dieser Position kann das Bodenbauteil 16 näher an das Kartuschengehäuse 12 heran gerückt werden, bis nämlich die beiden Flansche 25 und 15 aneinander anliegen.

Die Figur 5 zeigt die in Figur 3 dargestellte Position von rechts in Figur 3. Der Flansch 15 der Gleithülse 14 weist einen Abstand von dem Flansch 25 des Hülsenabschnitts 18 des Bodenbauteils 16 auf. Der Vorsprung 30 liegt an der oberen Begrenzungskante der Durchbrechung 31 an. Wird nun der Boden 17 durch zunehmenden Wasserdruck verschoben, so entsteht schließlich die Situation, die in Figur 4 dargestellt ist. Die beiden Flansche 15 und 25 liegen aneinander an, und der Vorsprung 30 liegt an der unteren Kante der Durchbrechung 31 an.

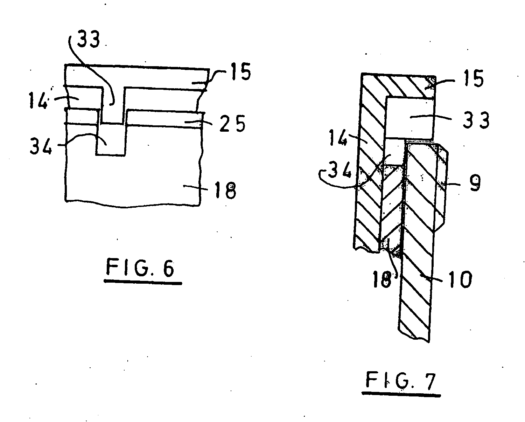

Nun zu Figur 6. Diese zeigt eine Ansicht ähnlich wie die Figur 5, nämlich in radialer Richtung auf die ineinander gesteckten Gleithülse 14 und Bodenbauteil 18. An der Unterseite des Flanschs 15 der Gleithülse 14 ist an dieser Stelle eine Rippe 33 ausgebildet, die beispielsweise einstückig mit dem Flansch 15 sein kann. An der gleichen Stelle ist in dem Bodenbauteil 18 von dessen Stirnkante ausgehend ein Schlitz 34 ausgebildet, der von der Stirnkante ausgehend so tief dimensioniert ist, dass bei Anliegen der beiden Flansche 15, 25 die Rippe 33 Platz in dem Schlitz 34 hat. Der Sinn dieser Rippen 33 liegt darin, dass diese auf der Stirnkante des die Aufnahme 6 enthaltenden Bauteils 10 aufliegen können, so dass das Aufschrauben der Überwurfmutter eine axiale Festlegung der Gleithülse 14 und damit der Mischerkartusche gewährleistet. Dieses Aufliegen der Rippe 33 auf der Stirnkante ist in Figur 7 dargestellt, wobei aus Gründen der besseren Darstellung noch ein kleiner Zwischenraum gelassen wird.

## Patentansprüche

1. Mischerkartusche, mit
1.1 einem Kartuschengehäuse (12),
1.2 einem in dem Kartuschengehäuse (12) angeordneten Mischersystem,
1.3 einem das Kartuschengehäuse (12) in Richtung auf eine Aufnahme (6) einer Sanitärarmatur abschließenden Boden (17) mit Durchgängen (21) für Wasser, sowie mit
1.4 mindestens einer Dichtung zwischen dem Mischersystem und dem Kartuschenboden (17), wobei
1.5 der Kartuschenboden (17) dem Kartuschengehäuse (12) gegenüber begrenzt beweglich an diesem gehaltert ist,
**dadurch gekennzeichnet, dass**
1.6 der Kartuschenboden (17) an einem Bodenbauteil (16) ausgebildet ist, das auch einen das Kartuschengehäuse (12) umgreifenden Hülsenabschnitt (18) aufweist, und dass
1.7 zwischen der Mantelfläche des Kartuschengehäuses (12) und dem Hülsenabschnitt (18) des Bodenbauteils (16) eine Gleithülse (14) angeordnet ist, der gegenüber das Bodenbauteil (16) verschiebbar ist, wobei
1.8 die radiale Innenseite des Hülsenabschnitts (18) des Bodenbauteils (16) an der radialen Außenseite der Gleithülse (14) insbesondere flächig anliegt.

2. Mischerkartusche nach Anspruch 1, bei der die Gleithülse (14) mindestens in Abzugsrichtung des Kartuschenbodens (17) fest mit dem Kartuschengehäuse (12) verbunden ist.

3. Mischerkartusche nach einem der vorhergehenden Ansprüche, bei der zwischen der Gleithülse (14) und dem Bodenbauteil (16) ein Rastmittel angeordnet ist, das die begrenzte Bewegung zulässt.

4. Mischerkartusche nach einem der vorhergehenden Ansprüche, bei der an der Gleithülse (14) mindestens ein Rastvorsprung (30) angeordnet ist, der in eine Öffnung (31) des Hülsenabschnitts (18) des Bodenbauteils (16) eingreift.

5. Mischerkartusche nach einem der vorhergehenden Ansprüche, bei der die Gleithülse (14) einen nach außen vorspringenden Flansch (15) aufweist, der eine Anlagefläche für eine Stirnkante des Hülsenabschnitts (18) des Bodenbauteils (16) bildet.

6. Mischerkartusche nach einem der vorhergehenden Ansprüche, bei der die Gleithülse (14) sich an einer Schulter (13) des Kartuschengehäuses (12) abstützt.

7. Anordnung bestehend aus einem Armaturengrundkörper und einer Mischerkartusche nach einem der vorhergehenden Ansprüche, bei der die Kartusche (7) in der Aufnahme (6) des Armaturengrundkörpers in einer festen axialen Position festlegbar ist.

8. Anordnung nach Anspruch 7, bei der die axiale Position der Mischerkartusche (7) in der Aufnahme (6) des Armaturengrundkörpers durch eine gegen einen Anschlag aufschraubbare Überwurfmutter (8) bestimmt ist.

9. Anordnung nach einem der vorhergehenden Ansprüche 7 oder 8, bei der der Kartuschenboden (17) mit jeweils einem Stutzen (19) in Öffnungen (4, 5) der Aufnahme (6) des Armaturengrundkörpers eingreift.

## Claims

1. A mixer cartridge, with
1.1 a cartridge housing (12),
1.2 a mixer system disposed in the cartridge housing (12),
1.3 a base (17) closing the cartridge housing (12) in the direction of a receptacle (6) of a sanitary fitting with passages (21) for water, and with
1.4 at least a seal between the mixer system and the cartridge base (17), whereby
1.5 the cartridge base (17) is held on the cartridge housing (12) with restricted movement relative to the latter,
**characterised in that**
1.6 the cartridge (17) is formed on a base component (16) that also features a sleeve section (18) surrounding the cartridge housing (12), and that
1.7 between the jacket surface of the cartridge housing (12) and the sleeve section (18) of the base component (16), a sliding sleeve (14) is disposed, relative to which the base component (16) is displaceable, whereby
1.8 the radial interior side of the sleeve section (18) of the base component (16) lies on the radial exterior side of the sliding sleeve (14), particularly on a surface.

2. The mixer cartridge according to claim 1, whereby the sliding sleeve (14) is firmly connected with the cartridge housing (12), at least in the removal direction of the cartridge base (17).

3. The mixer cartridge according to one of the preceding claims, in which between the sliding sleeve (14) and the base component (16) a means of locking is disposed, which permits restricted movement.

4. The mixer cartridge according to one of the preceding claims, in which at least a locking projection (30) is disposed on the sliding sleeve (14), which locking projection (30) interlocks into an opening (31) of the sleeve section (18) of the base component (16).

5. The mixer cartridge according to one of the preceding claims, in which the sliding sleeve (14) features a flange (14) projecting outwards, which forms a contact surface for a face edge of the sleeve section (18) of the base component (16).

6. The mixer cartridge according to one of the preceding claims, in which the sliding sleeve (14) is supported on a shoulder (13) of the cartridge housing (12).

7. An arrangement consisting of a fitting body and a mixer cartridge according to one of the preceding claims, in which the cartridge (7) can be fixed in the receptacle (6) of the fitting body in a fixed axial position.

8. The arrangement according to claim 7, in which the axial position of the mixer cartridge (7) in the receptacle (6) of the fitting body is determined by a union nut that can be screwed against a limit stop.

9. The arrangement according to one of the preceding claims 7 or 8, in which the cartridge base (17) interlocks with a nipple (19) into the openings (4, 5) of the receptacle (6) of the fitting body.

## Revendications

1. Cartouche pour mitigeur, comprenant
1.1 un corps (12) de cartouche,
1.2 un système mitigeur disposé dans le corps (12) de cartouche,
1.3 un fond (17) obturant le corps (12) de cartouche en direction d'un réceptacle (6) d'une robinetterie sanitaire, fond qui présente des orifices de passage (21) de l'eau, ainsi que comprenant
1.4 au moins un joint entre le système mitigeur et le fond (17) de cartouche, sachant que
1.5 le fond (17) de cartouche est retenu contre le corps (12) de cartouche et peut se déplacer dans certaines limites par rapport à lui,
**caractérisée en ce que**
1.6 le fond (17) de cartouche est configuré contre un composant (16) de fond, composant qui présente lui aussi un segment (18) de douille ceinturant le corps (12) de cartouche, et **en ce que**
1.7 entre la surface enveloppante du corps (12) de cartouche et le segment (18) de douille du composant (16) de fond est disposée une douille coulissante (14) par rapport à laquelle le composant (16) de fond peut se déplacer, sachant que
1.8 le côté intérieur radial du segment (18) de douille du composant (16) de fond applique contre le côté extérieur radial de la douille coulissante (14), notamment sur une surface.

2. Cartouche de mitigeur selon la revendication 1, sur laquelle la douille coulissante (14) est fermement reliée, au moins dans la direction d'évacuation du fond (17) de cartouche, avec le corps (12) de cartouche.

3. Cartouche de mitigeur selon l'une des revendications précédentes, sur laquelle un moyen de crantage a été disposé entre la douille coulissante (14) et le composant (16) de fond, moyen qui autorise le mouvement limité.

4. Cartouche de mitigeur selon l'une des revendications précédentes, sur laquelle la douille coulissante (14) comporte au moins une saillie de crantage (30), saillie qui engrène dans un orifice (31) du segment (18) de douille du composant (16) de fond.

5. Cartouche de mitigeur selon l'une des revendications précédentes, sur laquelle la douille coulissante (14) comporte un flasque (15) faisant saillie vers l'extérieur, flasque qui forme une surface sur laquelle vient appliquer une arête frontale du segment (18) de douille du composant (16) de fond.

6. Cartouche de mitigeur selon l'une des revendications précédentes, sur laquelle la douille coulissante (14) s'appuie contre un épaulement (13) du corps (12) de cartouche.

7. Agencement composé d'un corps de base de robinetterie et d'une cartouche de mitigeur selon l'une des revendications précédentes, dans lequel la cartouche (7) est immobilisable sur une position axiale fixe dans le réceptacle (6) du corps de base de robinetterie.

8. Agencement selon la revendication 7, dans lequel la position axiale de la cartouche (7) de mitigeur dans le réceptacle (6) du corps de base de robinetterie est définie par un écrou à collet (8) vissable jusqu'à une butée.

9. Agencement selon l'une des revendications précédentes 7 ou 8, dans lequel le fond (17) de cartouche pénètre par un embout (19) respectif dans des orifices (4, 5) du réceptacle (6) du corps de base de robinetterie.
